# EUROPEAN PATENT APPLICATION

(11) **EP 1 202 499 A2**
(43) Date of publication of application: **02.05.2002**
(21) Application number: 01124853.1
(22) Date of filing: 18.10.2001
(51) Int. Cl.: H04L 12/56

(54) **Routing of broadband packetized data**

(30) Priority: 24.10.2000 US 695354
(71) Applicant: GENERAL INSTRUMENT CORPORATION, Horsham, PA 19044 (US)
(72) Inventor: Kaku, Vicky B., San Diego, California 92129 (US)
(74) Representative: Hoeger, Stellrecht & Partner

(57) **Abstract**

An efficient, integrated solution for processing input transport streams, such as MPEG2 streams. MPEG packets are routed from an input circuit card to one or more various target processor cards in a chassis. The processor cards provide functions such as transcoding, multiplexing, splicing, scrambling, and so forth. Each processor card also has a router for routing a received packet to one of a number of available hardware processing paths. Customized IP-type routing is used to encapsulate and route the packets to the processor cards, where a destination address field provides source information regarding a received packet, such as a source slot and port, and a packet identifier (PID). The routers are configured by a system host computer to efficiently use the available resources of the processor cards.

## Description

### BACKGROUND OF THE INVENTION

The present invention relates to processing of packetized digital data. In particular, packets of compressed data from input transport streams, such as MPEG data, are routed to processors on different circuit cards in a chassis (e.g., for transcoding, multiplexing and other processing) using an Internet Protocol (IP)-type routing protocol.

The following acronyms and terms are used:
ARP - Address Resolution Protocol
ASI - Asynchronous Serial Input
ASIC - Application-Specific Integrated Circuit
BP - Back Plane
CCA - Circuit Card Assembly
DPRAM - Dual Port Random Access Memory
DSP - Digital Signal Processor
ECM - Entitlement Control Message
FIFO - First-In, First Out (buffer)
FPGA - Field-Programmable Gate Array
HSC - Hot Swap Controller
IP - Internet Protocol
MAC - Medium Access Control
MCG - Motorola Computer Group
MPEG - Moving Pictures Expert Group
PCI - Peripheral Component Interconnect
PHY - Physical Interface
PID - Packet Identifier
PMC - PCI Mezzanine Card
PROM - Programmable Read-Only Memory
SMII - Serial Media Independent Interface

Commonly, it is necessary to process input transport streams, e.g., at a headend of a broadband communication network, such as a cable television network, to provide corresponding output transport streams in a more suitable format. For example, it may be desirable to perform transcoding, splicing (ad insertion or other local programming insertion), multiplexing, encrypting, and PID aliasing. PID aliasing refers to reassigning a PID of an input channel with another value when necessary (e.g., when some channels in the input transport streams have the same PID) to avoid having redundant PIDs in the output transport streams.

However, prior systems for processing such input transport streams have not been fully satisfactory. In particular, some systems use discrete hardware that results in a very inflexible architecture. Moreover, components such as multiple DPRAMs are used for PID aliasing, which add significant costs.

Accordingly, it would be desirable to provide an efficient, integrated solution for processing input transport streams, such as MPEG2 streams.

The system should provide routing of MPEG packets among various CCAs (e.g., boards) in a chassis, which provide functions such as transcoding, multiplexing, splicing, scrambling, and so forth. The system should use a customized IP-like routing to route the packets among the cards.

The system should provide the ability to route any packet to any target MPEG2 processing engine on any board across a backplane of the chassis using multiple routing resources, and the ability to handle PID aliasing in the process.

The system should provide various benefits, including a quicker time to market, flexibility, and a future proof architecture. The system should preferably use off-the-shelf components that can be readily modified.

The present invention provides a system having the above and other advantages.

### SUMMARY OF THE INVENTION

The present invention relates to processing of packetized digital data, such as broadband MPEG data.

The invention involves routing of MPEG packets by encapsulating them over a customized IP packet, and embedding PID alias values within a specified field of the IP packet. For example, the invention may use a chassis such as MCG's CPX8216IP or CPX1204IP compact PCI chassis. The invention may also use a customized router that is based on a conventional IP router such as the Model LX2212AEC (Intel Corp.), and circuit cards with DSPs which are available from various suppliers. However, the invention is not limited to use with any particular models of components.

The invention provides a way to move packets of data, such as MPEG2 packets, between different circuit cards in a chassis. Some of the cards are provided with a processor (DSP) for performing any desired processing of the packets. In particular, a customized IP-like routing scheme is used at a router on an input card that receives the packets, e.g., from a remote upstream source, or local source, to encapsulate the packets. The encapsulated packets are routed from the input card to one or more target processor cards.

The invention may be used with MCG's 8216IP chassis, whose backplane is designed specifically for data traffic on IP from any slot to any slot. MCG's 8216IP 16-slot chassis allows a board-to-board data pathway.

Moreover, using Intel's LX2212AEC as the IP router enables the ability to embed the PID alias values within the IP packet's destination MAC address. This is achieved by building custom IP header packets. The invention achieves maximum flexibility by providing routing of any PID from multiple MPEG2 transport streams to any target processor chip on any board. Alternatively, the invention can enable an IP router to be used as a router for MPEG data or any other packetized data form.

The IP router ASIC provides routability of packetized data from any one of, e.g., ten input ports to any MPEG2 processing engine on any board.

The IP router ASIC along with associated memory is used on every board. The ASIC can be programmed with routing tables and entry tables via PCI. Programming the entry table allows embedding the PID alias value in the destination MAC address field of the IP packet. The next stage is the hardware, which may extract the PID alias value from the customized IP header and replace the MPEG2 packet's PID with it. This reduces memory costs.

In particular, the invention uses an IP destination address to carry source information of an MPEG packet, such as the slot number, port number and original PID. This is in distinction to the conventional use of a destination address to identify a network card that is to receive a packet. It is possible to carry the source information in other portions of the IP packet.

An input card router performs a table lookup or the like based on the destination IP address to determine which target board on the chassis the packet is to be routed to. Each output port of the input card's router may be hardwired to a different target board such that an output port identifies the associated target board.

When the packet is received at the target board(s), it is processed at a processing card router. This router performs a lookup, again based on the destination IP address, to provide a PID alias value in a destination MAC address field of the modified IP packet. The processing card router then passes the packet to the designated target port of a hardware path on the processing card. The modified IP packet is decapsulated, and the PID alias value is substituted for the original PID within the MPEG2 packet. During decapsulation, the IP header is stripped, and the decapsulated MPEG2 packet is sent to a DSP for further processing.

The routing table within the routers on the different cards contains information that may be configured by a system host computer, e.g., to optimize the use of the processing resources at the cards.

Input card and target processor card methods and apparatuses are presented.

### BRIEF DESCRIPTION OF THE DRAWINGS

FIG. 1 illustrates a chassis backplane in accordance with the present invention,
FIG. 2 illustrates a broadband audio/video/data router in accordance with the present invention.
FIG. 3 illustrates the input processor card of FIG. 2 in accordance with the present invention.
FIG. 4(a) illustrates an encapsulated MPEG transport packet in accordance with the present invention.
FIG. 4(b) illustrates a method for routing a packet, and providing PID aliasing, in accordance with the present invention.
FIG. 5 illustrates a processing/DSP card for transcoding, muxing or other processing, in accordance with the present invention.

### DETAILED DESCRIPTION OF THE INVENTION

The invention relates to the fields of digital data broadcasting and IP routing.

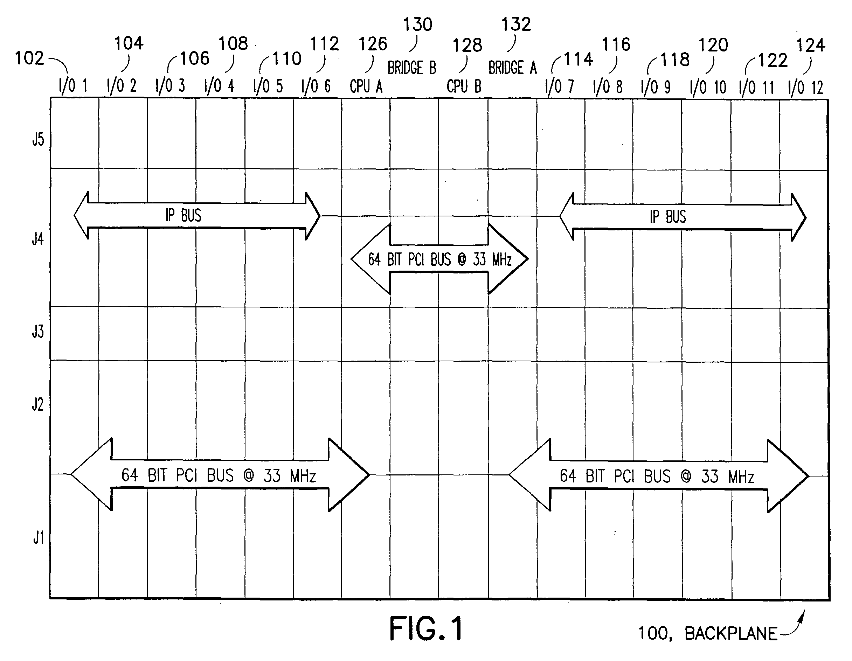

FIG. 1 illustrates a chassis backplane 100 in accordance with the present invention.

In an example implementation, MCG's CPX8216IP or CPX1204IP chassis, which are compact PCI chassis, are used. The CPX8216IP is a 16 slot 12RU chassis while the CPX1204IP is a five slot 3RU chassis.

A number of input/output (I/O) slots 102-124 are provided, along with CPU slots 126, 128 and bridge slots 130, 132.

Moreover, these chassis have two communication buses in the backplane:
(1) Compact PCI (cPCI), 64 bits wide at 33 MHz;
(2) IP interconnect; a serial path for data to be sent from any board to any board at 125 MHz.

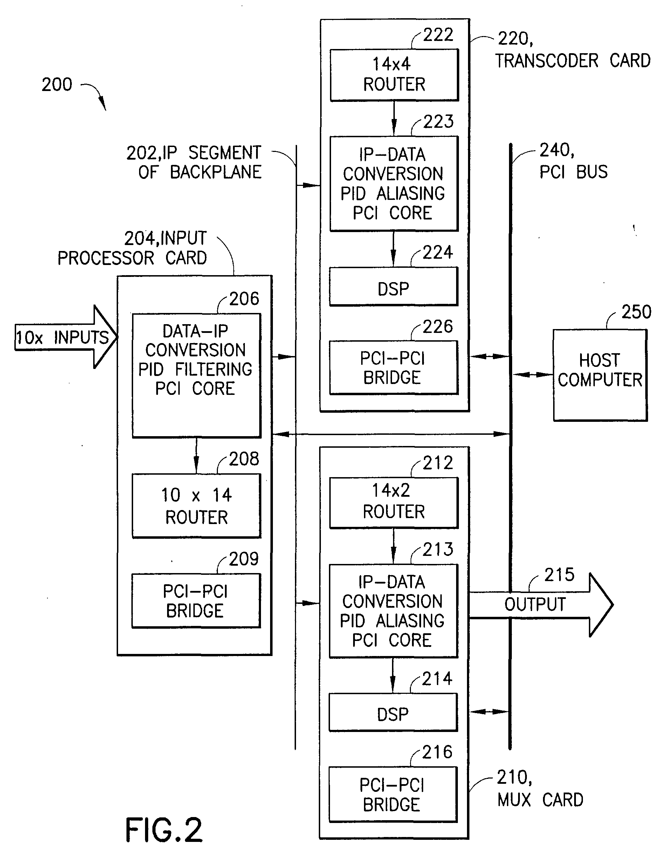

FIG. 2 illustrates a broadband audio/video/data router in accordance with the present invention.

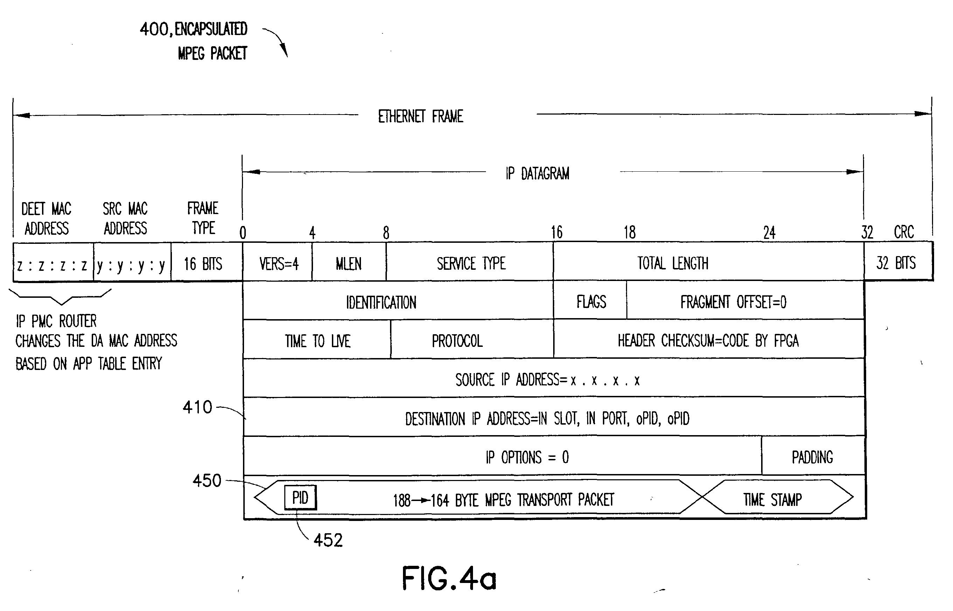

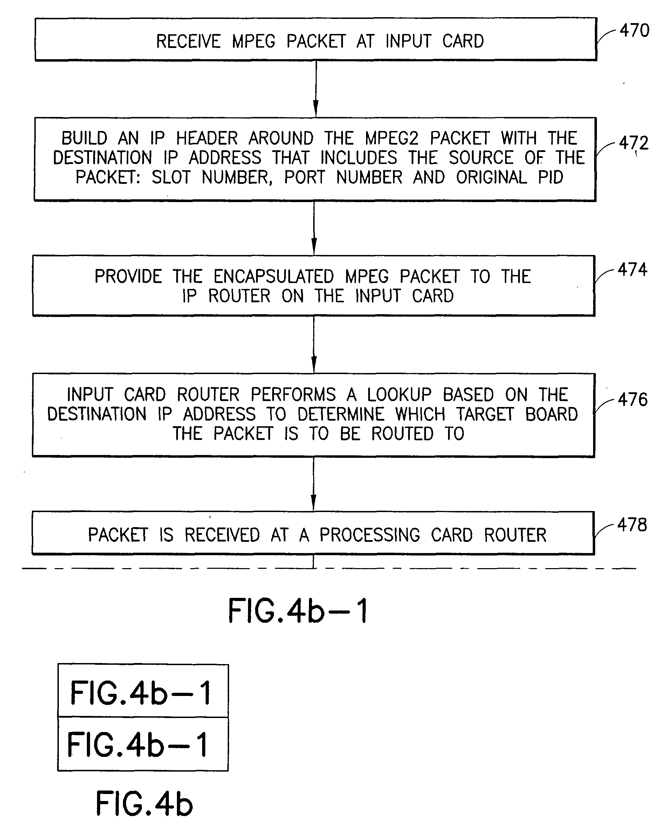

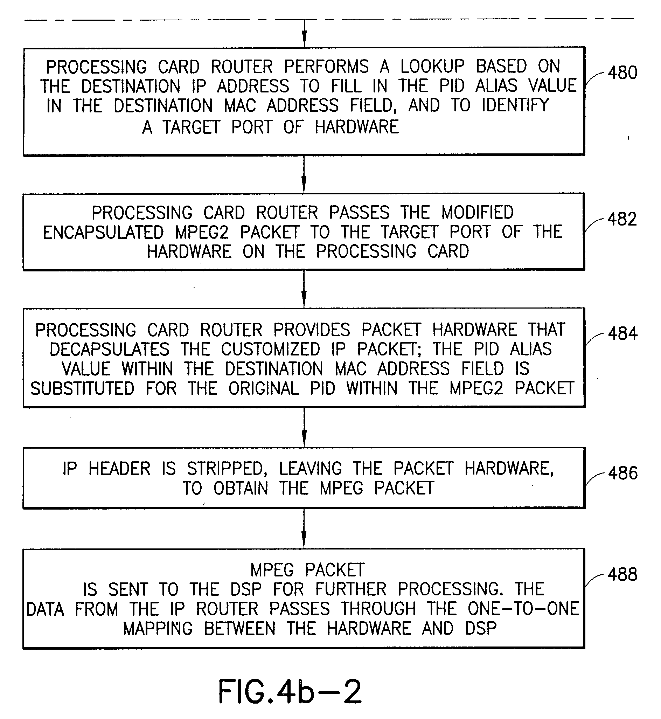

A remote input multiplex (e.g., ten channels) is provided to an input processor card 204. The multiplex may be provided via a remote transmission, or from a local storage device, for example. Note that additional input cards may be provided to handle additional input multiplexes. The input card 204 includes a function 206 that provides data-to-IP conversion and PID filtering (e.g., dropping of specific packets in a channel based on their PID). Data-to-IP conversion refers to encapsulating packets into an IP-like format, as described below particularly in connection with FIG. 4. A router 208 may be a 24-port router that is configured to output the ten input channels on any of fourteen output paths to an IP segment 202 of the backplane 100. Of course, the configuration discussed is an example only, as many variations will be apparent to those skilled in the art. The IP backplane segment 202 communicates with any number of other cards in the chassis, such as example cards 210 and 220 for performing some desired target processing of the recovered packets.

The card 210, which is configured as a mux card in the present example, includes a function 213 that provides IP-to-data conversion, PID aliasing, and a PCI-to-PCI bridge 216. IP-to-data conversion refers to decapsulating the encapsulated packets received from the input card 204. An output 215 of the card 210 is provided.

Similarly, the card 220, which is configured as a transcoder card in the present example, includes a function 223 that provides IP-to-data conversion, PID aliasing, and a PCI-to-PCI bridge 226.The card 210 may also include two example DSPs 214 for performing multiplexing, while the card 220 includes four example DSPs 224, each for performing transcoding. However, the cards 210, 220 may include processing circuitry for performing any desired processing/modification of the packets.

Moreover, the cards 210, 220 includes respective routers 212, 222 that receive the packets from the router 208 of the input card 204. The routers 212, 222 route the received packets to the functions 213, 223, respectively, for subsequent use at the respective DSPs using techniques that are discussed further below.

It is also possible to provide additional cards similar to the cards 210, 220 in the chassis. For example, if additional transcoding resources are need, additional cards such as the card 220 may be provided.

The routers 208, 212, and 222 may comprise off-the-shelf IP routers that are modified in accordance with the present invention.

A processor board 250 comprises a host computer for the entire system. For example, Motorola's 366 MHz MPC750 may be used.

The CPX8216IP and CPX1204IP model chassis have two independent communication pathways: [1] the cPCI 240 bus allowing for configuration and control, and the passage of compressed bitstreams to the mux, and [2] the IP interconnect 202 allowing for incoming data to be distributed to any card. Based on the need to route MPEG2 packets to any processor (DSP) on any board, the IP interconnect 202 is taken advantage of so as to serve as an MPEG2 router. This is made possible by installing routers (such as 212, 222) on the cards. By having a router on every board, maximum flexibility is achieved for routing any packet anywhere. Any incoming packet can be routed to any target processor device on any target card. Moreover, both chassis models may have a Motorola 750 PowerPC-based CPU card 250.

Generally, the invention provides a way to move packets between cards based on the desired manipulation/processing that is carried out at the cards. The packets are routed using a customized IP-like protocol.

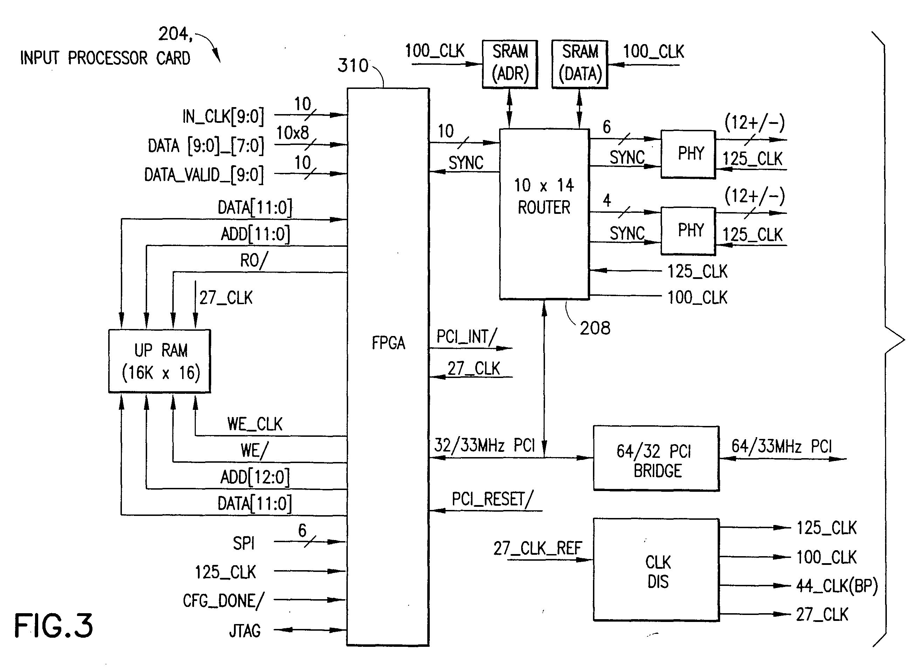

FIG. 3 illustrates the input processor card of FIG. 2 in accordance with the present invention.

As mentioned, the Input Card's (INP) 204 primary function is to accept up to, e.g., 10 MPEG2 data streams, perform PID filtering and encapsulate the recovered packets over a customized IP packet using the encapsulation/routing protocol of the present invention.

FIG. 3 shows specific components and signals in an example embodiment. The router chipset 208 is a 24-port router that is configured as 10x14 (10 inputs, 14 outputs). An FPGA 310 provides a loadable IP Ethernet template via PCI, and builds an Ethernet/IP packet around MPEG2 data for SMII interface to the router at 125MHz. The FPGA 310 may handle ten SMII interfaces to the router at 125 MHz.

FIG. 4(a) illustrates an encapsulated MPEG transport packet in accordance with the present invention. A customized Ethernet IP-like template 400 (encapsulating packet) surrounds the MPEG2 transport packet 450, with PID field 452 (encapsulated packet).

The destination IP address 410 is used to carry the exact packet source, which is comprised of [1] board slot, [2] spigot/port number, and [3] the 13-bit original MPEG2 packet PID (oPID) with leading three bits of zeros. This field identifies the source of the packet throughout the routing chain. The notation "oPID:oPID" refers to two eight-bit fields that carry the 13-bit PID. The destination IP address is unique for each and every component within a transport stream. A memory lookup based on this field is performed to determine which one of 14 outputs the packet is to be routed to. The destination IP address field is again used later in the TRC and MUX board for PID aliasing. The routing table of the router is programmed by way of PCI by the host CPU. Any packet can be routed back to the host via the PCI backbone.

FIG. 4(b) illustrates a method for routing a packet, and providing PID aliasing, in accordance with the present invention. At box 470, an incoming MPEG packet is received at the input card (e.g., card 204 in FIG. 2). At box 472, and IP header is built that provides information regarding the source of the MPEG packet in an IP destination address field. At box 474, an input processor at the input card handles the encapsulated MPEG packet, and provides it to a router. In particular, at box 476, a lookup is performed to determine which target board(s) the packet is to be routed to. Such a lookup may be configured by the host CPU to efficiently allocate the packets among the available resources of the target processing boards.

When the packet is received at the target board(s), it is processed at a router there (box 478). At box 480, another lookup is performed to obtain a PID alias value as a function of the destination IP address, again, where the lookup is configured by the host CPU, e.g., via the PCI at the time of system power-up. The PID alias value is provided in a destination MAC address field of the modified encapsulating IP packet.

An additional return value of this lookup is a specified target port for hardware on the card. At box 482, the processing card router provides the encapsulating packet to the specified target port of packet hardware on the card. For example, in the specific example of FIG. 2, the transcoder card 220 has four ports and the mux card 210 has two ports.

At box 484, the packet hardware decapsulates the customized IP packet, and substitutes the PID alias value for the original PID in the encapsulated MPEG packet (in the field 452).

At box 486, the IP header is stripped leaving the packet hardware, thereby yielding the MPEG packet in its native form. At box 488, the MPEG packet is sent to the DSP associated with the specified target port for further processing. The processed MPEG packet may ultimately be provided in an output transport stream for receipt by a decoder.

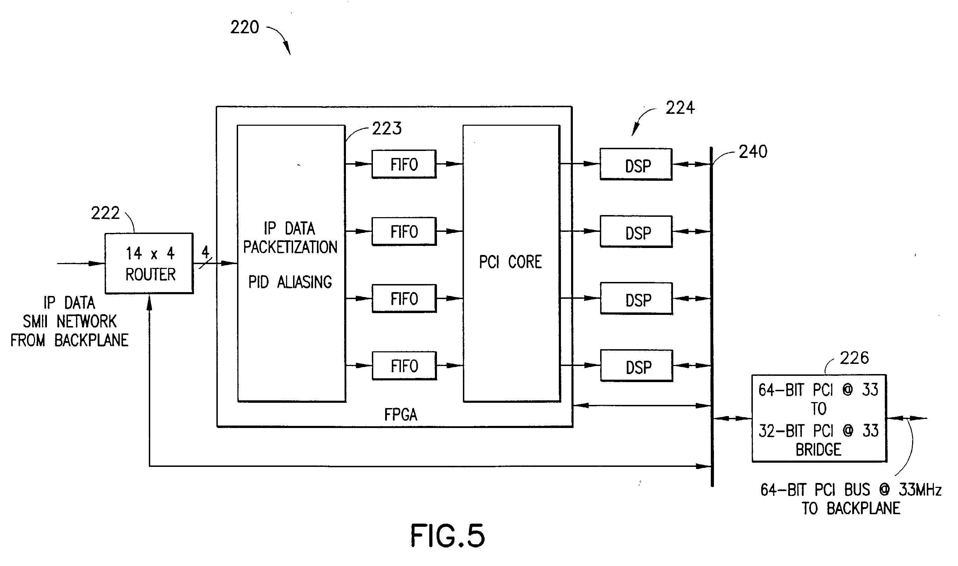

FIG. 5 illustrates a processing card for transcoding, muxing or other processing, in accordance with the present invention.

The example shows the transcoding card 220 of FIG. 2, where four DSPs 224 are provided.

Accordingly, it can be seen that the present invention provides an efficient, integrated solution for processing input transport streams, such as MPEG2 streams. The invention provides routing of MPEG packets among various cards in a chassis, which provide target processing functions such as transcoding, multiplexing, splicing, scrambling, and so forth. Customized IP-type routing is used to route the packets among the cards. A packet with any PID can be routed to any target MPEG2 processing engine on any board across a backplane. The system may use off-the-shelf components to improve cost effectiveness and reduce development time.

Furthermore, PID aliasing may be performed by taking advantage of the architecture of an IP router on a target processor card to embed values within an IP packet based on the destination IP address. A memory lookup based on the destination IP address is used to indicate which one of multiple outputs and, in turn, target processors the packet is to be routed to. The aliased PID is embedded in the destination MAC address as the packet is sent out of the IP router. These parameters are programmed by a host CPU via PCI.

Moreover, by having PID aliasing embedded within the IP router, ten 32Kbyte DPRAMs on the input processing card are eliminated, compared to some conventional systems, which in turn lowers cost and increases reliability since there are fewer components that can fail.

Although the invention has been described in connection with various preferred embodiments, it should be appreciated that various modifications and adaptations may be made thereto without departing from the scope of the invention as set forth in the claims.

For example, while specific hardware has been identified herein for implementing the present invention, any suitable substitute hardware/software that provides an analogous functionality may be used.

## Claims

1. An input circuit card apparatus receivable in a chassis, and adapted to provide data to a plurality of additional circuit cards in the chassis via a backplane, comprising:
means for recovering at least one packet of digital data from a transport stream;
means for encapsulating the recovered packet within an encapsulating packet;
wherein the encapsulating packet comprises a field that contains source information regarding the recovered packet; and
a router having a plurality of output ports, each output port coupled to a corresponding one of the additional circuit cards;
wherein the router is configured to route the encapsulating packet to at least one of the additional circuit cards via at least a corresponding one of the output ports and via the backplane in accordance with the source information contained in said field.

2. The apparatus of claim 1, wherein:
the router is configured to route the encapsulating packet to a plurality of the additional circuit cards via a corresponding plurality of the output ports in accordance with the source information contained in said field.

3. The apparatus of claim 2, wherein:
the router is configured to route the encapsulating packet to the plurality of the additional circuit cards substantially concurrently.

4. The apparatus of one of claims 1 to 3, wherein:
said field comprises a destination address field.

5. The apparatus of one of claims 1 to 4, wherein:
the encapsulating packet is provided according to a customized Internet Protocol.

6. The apparatus of one of claims 1 to 5, wherein:
the transport stream is provided according to a broadband communication scheme.

7. The apparatus of one of claims 1 to 6, wherein:
the chassis is provided at a headend of a broadband communication network.

8. The apparatus of one of claims 1 to 7, wherein:
packets from a plurality of channels of the transport stream are recovered, encapsulated, and routed to the additional circuit cards.

9. The apparatus of one of claims 1 to 8, wherein:
the recovered packet is routed to the at least one additional circuit card according to a packet identifier of the recovered packet.

10. The apparatus of one of claims 1 to 9, wherein:
the router comprises a lookup table for determining the additional circuit card(s) to route the encapsulated packet to.

11. The apparatus of claim 10, wherein:
the lookup table is configured by a system host computer.

12. The apparatus of one of claims 1 to 11, wherein:
the source information comprises a source slot from which the at least one packet is recovered.

13. The apparatus of one of claims 1 to 11, wherein:
the source information comprises a source port from which the at least one packet is recovered.

14. The apparatus of one of claims 1 to 13, wherein:
the source information comprises a source packet identifier (PID) value.

15. A method for processing packetized digital data from a transport stream at an input circuit card that is receivable in a chassis, and adapted to provide data to a plurality of additional circuit cards in the chassis via a backplane, comprising the steps of:
recovering at least one packet of digital data from the transport stream;
encapsulating the recovered packet within an encapsulating packet;
wherein the encapsulating packet comprises a field that contains source information regarding the recovered packet; and
configuring a router having a plurality of output ports, each output port coupled to a corresponding one of the additional circuit cards, to route the encapsulating packet to at least one of the additional circuit cards via at least a corresponding one of the output ports and via the backplane in accordance with the source information contained in said field.

16. A processing circuit card apparatus receivable in a chassis, and adapted to receive data from an input card in the chassis via a backplane, comprising:
means for receiving at least one encapsulating packet from the input card, wherein the encapsulating packet encapsulates a packet of digital data recovered from a transport stream, and comprises a field that contains source information regarding the recovered packet; and
a router having a plurality of output ports, each output port coupled to a processing path;
each processing path comprising a packet decapsulator, and a target processing function;
wherein the router is configured to route the encapsulating packet on one of the processing paths in accordance with the source information contained in said field.

17. The apparatus of claim 16, wherein:
the target processing functions are common in the different processing paths.

18. The apparatus of claim 16 or 17, wherein:
said field comprises a destination address field.

19. The apparatus of one of claims 16 to 18, wherein:
the encapsulating packet is provided according to a customized Internet Protocol.

20. The apparatus of one of claims 16 to 19, wherein:
the transport stream is provided according to a broadband communication scheme.

21. The apparatus of one of claims 16 to 20, wherein:
the chassis is provided at a headend of a broadband communication network.

22. The apparatus of one of claims 16 to 21, wherein:
the router comprises a lookup table for determining the processing path on which to route the encapsulating packet.

23. The apparatus of claim 22, wherein:
the lookup table is configured by a system host computer.

24. The apparatus of one of claims 16 to 23, wherein:
the source information comprises a source slot from which the at least one packet is recovered.

25. The apparatus of one of claims 16 to 23, wherein:
the source information comprises a source port from which the at least one packet is recovered.

26. The apparatus of one of claims 16 to 25, wherein:
the source information comprises a source packet identifier (PID) value.

27. The apparatus of one of claims 16 to 26, wherein:
the packet decapsulator decapsulates the recovered packet and provides it to the associated target processing function for processing thereat.

28. The apparatus of one of claims 16 to 27, wherein:
the target processing functions comprise transcoders for transcoding the recovered packet.

29. The apparatus of one of claims 16 to 28, wherein:
the target processing functions comprise multiplexers for multiplexing the recovered packet.

30. The apparatus of one of claims 16 to 29, wherein:
the target processing functions comprise splicers for splicing the recovered packet with other packets.

31. The apparatus of one of claims 16 to 30, wherein:
the target processing functions comprise encryptors for encrypting the recovered packet.

32. The apparatus of one of claims 16 to 31, wherein:
the target processing functions comprise respective digital signal processors.

33. A method for processing packetized digital data at a processing circuit card that is receivable in a chassis, and adapted to receive data from an input card in the chassis via a backplane, comprising the steps of:
receiving at least one encapsulating packet from the input card, wherein the encapsulating packet encapsulates a packet of digital data recovered from a transport stream, and comprises a field that contains source information regarding the recovered packet; and
configuring a router having a plurality of output ports, each output port coupled to a processing path, to route the encapsulating packet on one of the processing paths in accordance with the source information contained in said field;
wherein each processing path comprises a packet decapsulator, and a target processing function.
